# EUROPEAN PATENT SPECIFICATION

(11) **EP 4 142 252 B1**
(45) Date of publication and mention of the grant of the patent: **09.04.2025**
(21) Application number: 21193269.4
(22) Date of filing: 26.08.2021
(51) Int. Cl.: H04L 65/10

(54) **METHOD FOR OPERATING A PORTABLE PRIMARY ELECTRONIC DEVICE AND AT LEAST ONE SECONDARY DEVICE**
VERFAHREN ZUM BETRIEB EINER TRAGBAREN PRIMÄREN ELEKTRONISCHEN VORRICHTUNG UND MINDESTENS EINER SEKUNDÄREN VORRICHTUNG
PROCÉDÉ DE FONCTIONNEMENT D'UN DISPOSITIF ÉLECTRONIQUE PRIMAIRE PORTABLE ET AU MOINS UN DISPOSITIF SECONDAIRE

(43) Date of publication of application: 01.03.2023
(73) Proprietor: ecom instruments GmbH, 97959 Assamstadt (DE)
(72) Inventor: KULKARNI, Shreevallabha Narayan, 560076 Bengaluru (IN); IDNANI, Amit, 560078 Bangalore (IN); HARTLEB, Jörg, 97959 Assamstadt (DE)
(74) Representative: BRP Renaud & Partner mbB Rechtsanwälte Patentanwälte Steuerberater

(56) References cited:
- US-A1- 2006 161 213
- US-A1- 2012 188 083

## Description

The present invention relates to a method for operating a portable electronic primary device and at least one electronic secondary device. The invention further relates to an assembly of such an electronic primary device and at least one secondary device, which are configured/programmed for carrying out the method according to the independent claim 1.

In corporate and public safety operations, safety-critical functions are often implemented on mobile electronic devices - hereinafter referred to as "primary device". Such a safety-critical function concerns, for example, the detection of dangers, and, in this context, the safety of the user or communication needs of the user of such a mobile electronic device. It is known to outsource parts of this function from the primary device to a separately realized secondary device, wherein a wireless or wired communication link is provided between the primary device and the secondary device. It is known, for example, to implement a sensor for danger detection as a separate secondary device and to provide a communication link between the primary device and the secondary device. If a possible dangerous situation for the user of the primary device is detected with the help of the sensor - i.e. the secondary device - data that characterize and concern the presence of the dangerous situation can be transmitted to the primary device via the communication link and displayed to the user there, for example as a perceptible warning signal.

It is directly obvious from the above that the safety-critical functions should be available without interruption or that the user should at least be informed of any interruption in the availability of the functions.

It is therefore a problem to the present invention to show new ways of implementing safety-relevant functions in an arrangement comprising an electronic primary device and at least one secondary device providing safety-relevant data and/or safety relevant functionality and having a communication link to the primary device.

The prior art US 2006/161213 A1 presents monitoring a telemetry signal strength between a centralized programmer and a remote device in order to assess whether it meets a minimum set of safety requirements during transfer of programming data.

This problem is solved by the subject of the independent patent claims. Preferred embodiments are the subject of the dependent patent claims.

The basic idea of the invention is therefore to monitor a communication link between an electronic primary device and an secondary device for this primary device after it has been established and to generate an error signal when the communication link is interrupted - particularly due to range issues interference issues, hardware issues, battery/power issues and the like - if the secondary device was classified as safety-critical when the communication link was established. In this way, the user of the primary device and secondary device can be informed - for example, by displaying the error signal or by creation of an acoustical signal - that the communication link has been interrupted and therefore no more - especially safety-relevant - data can be transmitted from the secondary device to the primary device.

Thus, by the method according to the invention, safety-critical situations which arise for the user of the primary device because the user assumes that the secondary device - for example a sensor with warning function - is functioning properly and that the secondary device interacts properly with the primary device, although - due to the interrupted communication link - both are no longer given, can be prevented or at least such situations can be counteracted.

The method according to the invention for operating a portable, i.e. mobile electronic device - hereinafter referred to as "primary device" -, in particular a cell phone, and at least one secondary device for the primary device comprises at least three measures a), b) and c). According to measure a) a communication link is established between the primary device and the at least one secondary device. **In** operation the secondary device is providing data or functionality being safety relevant for the user of the primary device. After or/and during the establishment of the communication link, according to measure b) it is detected, whether the at least one secondary device is a safety-critical secondary device or a non-safety-critical secondary device. **In** the former case, i.e. if in measure b) it is detected that at least one safety-critical secondary device is present, the communication link established in measure a) is monitored and an error signal is generated as soon as the communication link is interrupted. **It** is understood that with two or more safety-critical secondary devices one communication link can in each case be established and it can be proceeded according to measure c).

In accordance with a preferred embodiment, the detection according to measure b) is performed by comparing the secondary device with a secondary device list containing safety-critical secondary devices to be monitored. By means of such a secondary device list it can be easily determined - especially by the user of the electronic primary device or remotely, by a supervisor of the primary device - which secondary device is to be classified as "safety-critical". This list can be defined and modified by the user or third parties, in particular the supervisor of the primary device being different from the user. Modification of the list can also be carried out remotely.

In accordance with an advantageous further embodiment of the method, measure c) of creating an error signal comprises alerting a supervisor of the primary device different from the user of the primary device.

In accordance with an advantageous further embodiment of the method, after detection of a disconnection of a safety relevant secondary device, the primary device will transmit the error signal to an external control center, in particular the supervisor of the primary device. Optionally, the primary device will block provision of all user functions except critical functions on the primary device. Alternatively, an acknowledgment of transmission of the error signal can be requested. In this way it is ensured that the user of the primary device is aware of the interruption of the communication link.

According to another preferred embodiment, measures a) to c) of the method can be performed automatically each time the primary device is switched on.

In accordance with another advantageous further embodiment, the switch-on process can be aborted or at least temporarily stopped, if in measure a) no communication link can be established with at least one secondary device, which is listed in the secondary device list comprising safety-critical secondary devices. In this variant, it is therefore required to establish a communication link between any of the secondary devices listed in the secondary devices list and the device. This prevents safety-critical secondary devices from establishing a communication link in the first place without the user - for example by a corresponding note - being obtained knowledge of this or at least being able to obtain knowledge of it.

Therefore, according to another preferred embodiment, in a measure d) following measure c), the user is informed that in measure b) no or too few safety-critical secondary devices have been detected and consequently in measure a) no communication link - or too few communication links - has been established between the primary device and a safety-critical secondary device.

According to another advantageous embodiment, the error signal generated in measure c) is displayed to the user by the device. Additionally or alternatively, the error signal can be played back acoustically and/or haptically. In this way it is ensured that the user of the primary device is aware of the interruption of the communication link.

In accordance with an advantageous further embodiment, in measure c) at least one communication link between the primary device and at least one secondary device classified as non-safety-critical can also be monitored, wherein no error signal is generated if this communication link is interrupted.

The invention further relates to an arrangement with an electronic device, in particular a cell phone, and with at least one secondary device. The primary device and the at least one secondary device are designed and coordinated in such a way that a communication link can be established between them. The arrangement is set up/programmed for carrying out the method according to the invention so that the advantages of the method according to the invention are also transferred to the arrangement according to the invention.

According to a preferred embodiment of the arrangement, the secondary device includes or is a safety suit, a helmet, a gas sensor for detecting at least one gas or a toolbox, - a Smart Watch, Smart glass, or a thermal Scanner.

According to an advantageous embodiment of the arrangement, the communication link is wired, in particular as an Ethernet link, or wireless, in particular as a Bluetooth communication link. Of course, other connection types known to the skilled person, such as LPWAN, BLE, NFC/RFID, WIFI, or the like, can also be used.

Further important features and advantages of the invention result from the subclaims, from the drawing and from the corresponding figure description based on the drawing.

It goes without saying that the features mentioned above and the features to be explained below can be used not only in the combination indicated in each case, but also in other combinations or on their own, without leaving the scope of the present invention.

Preferred examples of the invention are shown in the drawing and are explained in more detail in the following description.

It shows, in each case schematically:
- Figure 1: illustrates an example of an arrangement 1 to the invention comprising a cell phone as a portable electronic primary device and a gas sensor as a secondary device;
- Fig. 2: a flow chart explaining the method according to the invention.

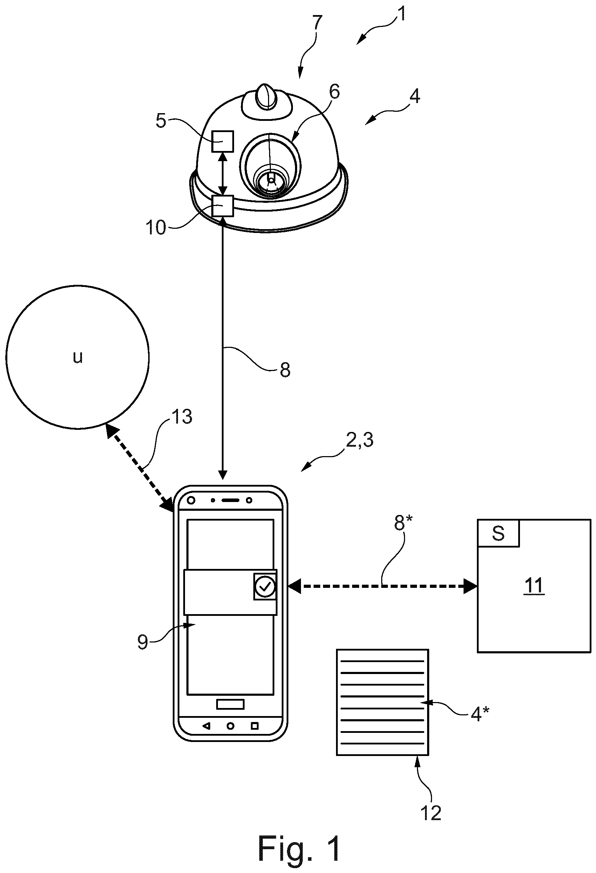

Figure 1 illustrates an example of an arrangement 1 according to the invention. The arrangement 1 comprises a primary electronic device 2 in the form of a cell phone 3 and a secondary device 4 in the form of a gas sensor 5. The primary device 2 can be used and controlled by a user U by means of user interaction 13.

As Figure 1 shows, the gas sensor 5 can be attached to a helmet 7, just like a headlamp 6, which the user (not shown) of cell phone 3 can wear to protect the user against head injuries. Instead of the gas sensor 5, other secondary devices 4 can be used in variants of the example. In addition, a control unit 10 in communication link with the gas sensor 5 can be provided on the helmet 7, which controls the gas sensor 5 and evaluates the sensor data transmitted by the gas sensor 5, especially processes them. A communication unit can be integrated into the control unit 10, which allows the establishment of a wireless communication link 8 - for example via "Bluetooth" - to the primary device 2.

**In** nominal operation, the gas sensor 5 transmits to the control unit 10 sensor data concerning the possible presence of a certain - for example highly flammable - gas in the vicinity of the helmet 7. These sensor data can be processed by the control unit 10 and transmitted to the electronic primary device 2 or cell phone 3 via communication link 8. Thus, in general, in operation the secondary device 4 is providing data or functionality being safety relevant for the user of the primary device 2.

If the gas sensor 5 detects the presence of a certain gas, the user of primary device 2 or cell phone 3 can be informed about this detection and warned in this way. In order for such a warning function to function reliably, it is therefore of the utmost importance that the communication link 8 between the secondary device 4 and the primary device 2 is not interrupted without the user of the primary device 2 being informed of such an interruption as soon as possible. Otherwise, the transmission of data from secondary device 4 to primary device 2, which would actually trigger a user warning, could fail to occur, so that the user remains unaware of a safety-critical situation - in the example scenario the detection of highly flammable gas - that has occurred.

As explained above, the electronic primary device 2, in particular the cell phone 3, and the secondary device 4 or the gas sensor 5 are designed and coordinated so that a communication link 8 can be established between them. In addition, the arrangement 1 from the primary device 2 and the secondary devices 4 are set up or programmed for carrying out the method according to the invention.

The communication link 8 between the primary device 2 and the secondary device 4, which is indicated in Figure 1 by an arrow marked with the reference sign 8, is conveniently configured - especially if the primary device 2 is a cell phone 3 as in the example of the figures - as to be wireless and as to be realized for example as a so-called "Bluetooth" connection. Alternatively to the wireless communication link 8, a wired communication link (not shown), for example in the form of an Ethernet connection, is conceivable.

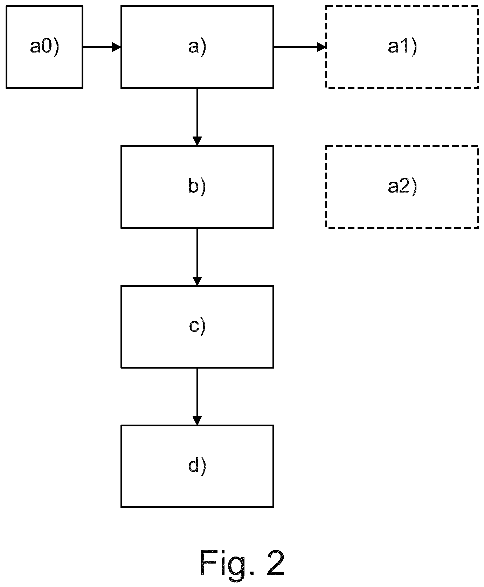

Figure 2 illustrates the method according to the invention in the form of a flow chart. This method comprises a measure a), according to which the communication link 8 is established between the cell phone 3 and the gas sensor 5. According to a further measure b), it is detected whether the gas sensor 5 is a safety-critical secondary device. In the example scenario this is the case; therefore, according to another measure c) the communication link established in measure a) is monitored.

Optionally, in a measure d) following measure c), the user can be informed that in measure b) no or too few safety-critical secondary devices 4 have been detected and consequently in measure a) no communication link - or too few communication links - has been established between the primary device 2 and a safety-critical secondary device 4.

If communication link 8 is interrupted during this monitoring phase, an error signal is generated and shown to the user in a display 9 of cell phone 3.

The primary device 2 can not only create an error signal, but also transmit the error signal to an external control center 11 (cf. figure 1) by means of a further communication link 8* being different from the communication link 8 between the secondary device 4 and the primary device 2. In this way, creation of an error signal can include alerting a supervisor S of the primary device 2 different from the user U of the primary device 2 and being located in the control center 11. Optionally, the primary device 2 will block provision of all user functions except critical functions on the primary device.

It is advisable to perform the method automatically each time the cell phone 3 is switched on - such switching on of the cell phone 3 is designated in Figure 2 as measure a0) preceding measure a).

The detection according to measure b) can be performed by comparing the secondary device 4 with a secondary device list 12 containing the safety-critical secondary devices 4* to be monitored. If the detected secondary device 4 - in the example scenario the gas sensor 5 classified as safety-critical - is listed in the secondary device list 12, the communication link 8 between the cell phone 3 and the gas sensor 5 is classified as safety-critical and the monitoring of this communication link 8 is performed according to measure c). By means of such a secondary device list 12 it can be easily determined - especially by the user of the electronic primary device - which secondary device 4 is to be classified as "safety-critical". The secondary device 12 list can be defined and modified by the user U or by third parties, in particular by means of remote control. It can also by defined and modified by the supervisor 13 or the control center 11 to which the error signal is transmitted.

In a variant of the method, the switch-on process can be stopped or even aborted at least temporarily in a measure a1) following measure a) if in measure a) no communication link 8 can be established with the secondary device 4 listed in the secondary device list. Moreover, the switch-on process can also be stopped or even aborted at least temporarily if in step a) a communication link 8 cannot be established with all cell phones 3 listed in the secondary device list. In case of such a stop or abort of the method, the user can be informed according to a measure a2) following measure a1) that in measure b) no or too few safety-critical secondary devices 4 have been detected. Measure a2) can be carried out in the same way as measure c), i.e. measure a2) can include alerting a supervisor S of the primary device 2 different from the user U of the primary device 2 and being located in the control center 11.

The preceding exemplary explanations, where the secondary device 4 is a gas sensor 5, also apply to other suitable secondary devices 4.

## Claims

1. A method for operating a portable electronic primary device (2), a cell phone (3), and at least one secondary device, comprising:
a) Establishing a communication link between the primary device (2) and the at least one secondary device (4);
**characterized by**:
b) Detecting whether the at least one secondary device (4) is a safety-critical secondary device (4);
If in measure b) it was detected that at least one safety relevant secondary device (4) is present:
c) Monitoring the communication link (8) and generating an error signal as soon as the communication link (8) is, permanently or temporarily, interrupted,
- wherein the detection according to measure b) is performed by comparing the secondary device (4) with a secondary device list containing safety-critical secondary devices (4) to be monitored.

2. The method according to claim 1, further **characterized in that**
- measure c) of creating an error signal comprises alerting an supervisor (S) of the primary device (2) different from the user.

3. The method according to claim 1 or 2, further **characterized in that** after detection of a disconnection of a safety relevant secondary device (4), the primary device (2) will transmit the error signal to an external control center (11) and/or the primary device (2) will block provision of all user functions except critical functions on the primary device (2).

4. The method according to one of the preceding claims, further **characterized in that** measures a) to c) of the method are carried out automatically each time the primary device (2) has been switched on by the user.

5. The method according to claim 4, further **characterized in that** the switch-on process is interrupted or at least temporarily stopped if no communication link can be established with at least one secondary device (4) that is/are included in the secondary device list of safety-critical secondary devices in measure a).

6. The method according to one of the preceding claims, further **characterized by** a measure d) following measure c), according to which the user is informed that in measure b) no or too few safety-critical secondary devices have been detected and consequently in measure a) no communication link of the primary device with a safety-critical secondary device has been established.

7. The method according to one of the preceding claims, further **characterized in that**
- the error signal generated in measure c) is displayed by the device; and/or
- the error signal is played back acoustically or haptically.

8. A system (1) comprising:
- an electronic primary device (2), a cell phone (3), and at least one secondary device which are designed and coordinated so that a communication link (8) can be established between them and which are set up/programmed for carrying out the method according to one of the preceding claims 1-7.

9. The arrangement according to claim 8, further **characterized in that** the at least one secondary device (4) is or comprises:
- a safety suit;
- a helmet;
- a gas sensor;
- a toolbox;
- a Smart Watch
- a Barcode Scanner or Smart Glass or Thermal Scanners for Critical Business Operation.

## Patentansprüche

1. Verfahren zum Betreiben einer tragbaren primären elektronischen Vorrichtung (2), eines Mobiltelefons (3) und mindestens einer sekundären Vorrichtung, umfassend:
a) Aufbauen einer Kommunikationsverbindung zwischen der primären Vorrichtung (2) und der mindestens einen sekundären Vorrichtung (4);
**gekennzeichnet durch:**
b) Erkennen, ob die mindestens eine sekundäre Vorrichtung (4) eine sicherheitskritische sekundäre Vorrichtung (4) ist;
wenn in Maßnahme b) erkannt worden ist, dass mindestens eine sicherheitskritische sekundäre Vorrichtung (4) vorhanden ist:
c) Überwachen der Kommunikationsverbindung (8) und Erzeugen eines Fehlersignals, sobald die Kommunikationsverbindung (8) dauerhaft oder vorübergehend unterbrochen ist,
- wobei das Erkennen gemäß Maßnahme b) durch Vergleichen der sekundären Vorrichtung (4) mit einer sekundären Vorrichtungsliste durchgeführt wird, die zu überwachende sicherheitskritische sekundäre Vorrichtungen (4) enthält.

2. Verfahren nach Anspruch 1, weiter **dadurch gekennzeichnet, dass**
- Maßnahme c) des Erstellens eines Fehlersignals Alarmieren eines Supervisors (S) der primären Vorrichtung (2), der sich vom Benutzer unterscheidet, umfasst.

3. Verfahren nach Anspruch 1 oder 2,
weiter **dadurch gekennzeichnet, dass** nach Erkennen einer Trennung einer sicherheitskritische sekundären Vorrichtung (4) die primäre Vorrichtung (2) das Fehlersignal an eine externe Steuerzentrale (11) überträgt und/oder die primäre Vorrichtung (2) Bereitstellung aller Benutzerfunktionen mit Ausnahme kritischer Funktionen in der primären Vorrichtung (2) blockiert.

4. Verfahren nach einem der vorstehenden Ansprüche,
weiter **dadurch gekennzeichnet, dass** Maßnahmen a) bis c) des Verfahrens automatisch jedes Mal durchgeführt werden, wenn die primäre Vorrichtung (2) von dem Benutzer eingeschaltet worden ist.

5. Verfahren nach Anspruch 4,
weiter **dadurch gekennzeichnet, dass** der Einschaltprozess unterbrochen oder zumindest vorübergehend gestoppt wird, wenn keine Kommunikationsverbindung mit mindestens einer sekundären Vorrichtung (4) aufgebaut werden kann, die in der sekundären Vorrichtungsliste sicherheitskritischer sekundärer Vorrichtungen in Maßnahme a) beinhaltet ist.

6. Verfahren nach einem der vorstehenden Ansprüche,
weiter **gekennzeichnet durch** eine Maßnahme d) infolge von Maßnahme c), wonach der Benutzer informiert wird, dass in Maßnahme b) keine oder zu wenige sicherheitskritische sekundäre Vorrichtungen erkannt worden sind und infolgedessen in Maßnahme a) keine Kommunikationsverbindung der primären Vorrichtung mit einer sicherheitskritischen sekundären Vorrichtung aufgebaut worden ist.

7. Verfahren nach einem der vorstehenden Ansprüche,
weiter **dadurch gekennzeichnet, dass**
- das in Maßnahme c) erzeugte Fehlersignal von der Vorrichtung angezeigt wird; und/oder
- das Fehlersignal akustisch oder haptisch wiedergegeben wird.

8. System (1), umfassend:
- eine primäre elektronische Vorrichtung (2), ein Mobiltelefon (3) und
mindestens eine sekundäre Vorrichtung, die ausgelegt und koordiniert sind, sodass eine Kommunikationsverbindung (8) zwischen ihnen aufgebaut werden kann, und die zum Durchführen des Verfahrens nach einem der vorstehenden Ansprüche 1-7 eingestellt/programmiert sind.

9. Anordnung nach Anspruch 8, die weiter **dadurch gekennzeichnet ist, dass** die mindestens eine sekundäre Vorrichtung (4) ist oder umfasst:
- ein(en) Sicherheitsanzug;
- ein(en) Helm;
- ein(en) Gassensor;
- ein(en) Werkzeugkasten;
- eine Smartwatch
- ein(en) Barcode-Scanner oder Smart Glass oder Wärmescanner für kritische Geschäftsabläufe.

## Revendications

1. Procédé de fonctionnement d'un dispositif électronique principal portable (2), d'un téléphone portable (3) et d'au moins un dispositif secondaire, comprenant :
a) l'établissement d'une liaison de communication entre le dispositif principal (2) et le au moins un dispositif secondaire (4) ;
**caractérisé par** :
b) la détection permettant de savoir si le au moins un dispositif secondaire (4) est un dispositif secondaire essentiel à la sécurité (4) ;
si à la mesure b) il a été détecté qu'au moins un dispositif secondaire pertinent en matière de sécurité (4) est présent :
c) la surveillance de la liaison de communication (8) et la génération d'un signal d'erreur dès l'interruption permanente ou temporaire de la liaison de communication (8),
- dans lequel la détection selon la mesure b) est effectuée en comparant le dispositif secondaire (4) avec une liste de dispositifs secondaires contenant des dispositifs secondaires essentiels à la sécurité (4) à surveiller.

2. Procédé selon la revendication 1, **caractérisé en outre en ce que**
- la mesure c) de création d'un signal d'erreur comprend l'alerte d'un superviseur (S) du dispositif principal (2) différent de l'utilisateur.

3. Procédé selon la revendication 1 ou 2,
**caractérisé en outre en ce qu'**après la détection d'une déconnexion d'un dispositif secondaire pertinent en matière de sécurité (4), le dispositif principal (2) enverra le signal d'erreur à un centre de commande externe (11) et/ou le dispositif principal (2) bloquera la mise à disposition de toutes les fonctions utilisateur à l'exception des fonctions essentielles sur le dispositif principal (2).

4. Procédé selon l'une des revendications précédentes,
**caractérisé en outre en ce que** les mesures a) à c) du procédé sont exécutées automatiquement chaque fois que le dispositif principal (2) a été mis sous tension par l'utilisateur.

5. Procédé selon la revendication 4,
**caractérisé en outre en ce que** le processus de mise sous tension est interrompu, ou au moins temporairement arrêté, si aucune liaison de communication ne peut être établie avec au moins un dispositif secondaire (4) qui est inclus dans la liste de dispositifs secondaires essentiels à la sécurité dans la mesure a).

6. Procédé selon l'une des revendications précédentes,
**caractérisé en outre par** une mesure d) faisant suite à la mesure c), selon laquelle l'utilisateur est informé que dans la mesure b) aucun dispositif secondaire essentiel à la sécurité n'a été détecté ou trop peu l'ont été, et par conséquent dans la mesure a) aucune liaison de communication du dispositif principal avec un dispositif secondaire essentiel à la sécurité n'a été établie.

7. Procédé selon l'une des revendications précédentes,
**caractérisé en outre en ce que**
- le signal d'erreur généré dans la mesure c) est affiché par le dispositif ; et/ou
- le signal d'erreur est reproduit de manière acoustique ou haptique.

8. Système (1), comprenant :
- un appareil électronique principal (2), un téléphone portable (3), et
au moins un dispositif secondaire qui sont conçus et coordonnés de manière à ce qu'une liaison de communication (8) puisse être établie entre eux et qui sont configurés/programmés pour mettre en œuvre le procédé selon l'une des revendications 1-7 précédentes.

9. Agencement selon la revendication 8, **caractérisé en outre en ce que** le au moins un dispositif secondaire (4) est ou comprend :
- une combinaison de sécurité ;
- un casque ;
- un capteur de gaz ;
- une boîte à outils ;
- une montre intelligente
- un lecteur de codes-barres ou des lunettes intelligentes ou des scanners thermiques destinés à des opérations vitales pour l'entreprise.
